# EUROPÄISCHE PATENTSCHRIFT

(11) **EP 3 749 464 B1**
(45) Veröffentlichungstag und Bekanntmachung des Hinweises auf die Patenterteilung: **23.02.2022**
(21) Anmeldenummer: 19700255.3
(22) Anmeldetag: 07.01.2019
(51) Int. Cl.: B05C 11/10

(54) **DOSIERVENTIL**
METERING VALVE
VANNE DE DOSAGE

(30) Priorität: 09.02.2018 DE 102018001048
(43) Veröffentlichungstag der Anmeldung: 16.12.2020
(73) Patentinhaber: Atlas Copco IAS GmbH, 75015 Bretten (DE)
(72) Erfinder: MITTAG, Sten, 76137 Karlsruhe (DE)
(74) Vertreter: Patentanwälte Bregenzer und Reule Partnerschaftsgesellschaft mbB
(86) Internationale Anmeldenummer: PCT/EP2019/050252
(87) Internationale Veröffentlichungsnummer: WO 2019/154570

(56) Entgegenhaltungen:
- WO-A1-2016/159338
- US-A1- 2015 302 292
- US-A1- 2015 369 373
- US-A1- 2016 136 664
- US-B1- 6 313 568

## Beschreibung

Die Erfindung betrifft ein Dosierventil, insbesondere zum Dosieren von viskosen Materialien wie Klebstoffen, Dichtstoffen, Dämmstoffen oder Wärmeleitpasten, gemäß Oberbegriff des Anspruchs 1 und ein Verfahren zum Dosieren von Flüssigkeit unter Verwendung eines Dosierventils gemäß Anspruch 12.

Dosierventile kommen überall dort zum Einsatz, wo Material in dosierten Mengen abgegeben werden muss. Insbesondere werden Dosierventile benutzt, um in der Automobilfertigung viskose Materialien wie Klebstoffe, Dichtstoffe, Dämmstoffe oder Wärmeleitpasten auf Werkstücke aufzutragen. Die kleinstmögliche dosierbare Menge hängt dabei davon ab, wie schnell das Dosierventil geöffnet und wieder geschlossen werden kann. Auch die Auftragsfrequenz von punktförmigen Dosen des viskosen Materials ist davon abhängig, wie schnell das Dosierventil zum Öffnen und Schließen geschaltet werden kann. Um ein schnelles Öffnen und Schließen zu erreichen, wurden bereits Piezo-Aktoren vorgeschlagen, deren spannungsinduzierte Längenänderung auf den Schließkörper des Dosierventils übertragen wird. Mittels Piezo-Aktoren gesteuerte Dosierventile zeichnen sich durch hohe Schaltfrequenzen aus. Dabei wurde einerseits vorgeschlagen, einen Piezo-Aktor zum Öffnen des Dosierventils zu verwenden, während das Schließen mittels eines Rückstellelements wie beispielsweise einer Feder erfolgt. Andererseits wurde vorgeschlagen, sowohl zum Öffnen als auch zum Schließen jeweils einen starr mit dem Schließkörper gekoppelten Piezo-Aktor zu verwenden. Ein Dosierventil der eingangs genannten Art ist aus der WO 2016/159338 A1 bekannt. Weitere Dosierventile sind aus der US 2015/0369373 A1 und der US 2015/0302292 A1 bekannt.

Es ist Aufgabe der Erfindung, ein Dosierventil zu entwickeln, das noch schneller geschaltet werden kann.

Diese Aufgabe wird erfindungsgemäß durch ein Dosierventil mit den Merkmalen des Anspruchs 1 und ein Verfahren gemäß Anspruch 12 gelöst. Vorteilhafte Weiterbildungen der Erfindung sind Gegenstand der abhängigen Ansprüche.

Der Erfindung liegt der Gedanke zugrunde, das Dosierventil mit einem ersten Piezo-Aktor zu öffnen und mit einem zweiten Piezo-Aktor zu schließen, ohne dass die Piezo-Aktoren starr mit dem Schließkörper gekoppelt sind. Zu diesem Zweck weist das Dosierventil ein mit dem Schließkörper fest verbundenes Betätigungselement auf, so dass der Schließkörper mitbewegt wird, wenn das Betätigungselement bewegt wird. Das Betätigungselement liegt in der Schließstellung, in der der Schließkörper auf dem Ventilsitz aufsitzt und einen Materialauslass des Dosierventils verschließt, entweder lose am ersten Piezo-Aktor an oder ist in einem Abstand zu diesem angeordnet, der kleiner ist als seine maximale Längenausdehnung, wenn er mit Spannung beaufschlagt wird. Gleichzeitig ist das Betätigungselement in einem Abstand zum zweiten Piezo-Aktor angeordnet, der größer ist als die maximale Längenausdehnung des ersten Piezo-Aktors. Zum Öffnen des Dosierventils wird der erste Piezo-Aktor mit Spannung beaufschlagt, so dass er sich aufgrund des Piezo-Effekts ausdehnt und aufgrund seiner Längenänderung das Betätigungselement mit einem Impuls beaufschlagt. Das Betätigungselement wird dann unter Mitnahme des Schließkörpers vorm ersten Piezo-Aktor weg "geschossen", so dass der Schließkörper in die Offenstellung gelangt, in der er vom Ventilsitz abgehoben ist und den Materialauslass freigibt. In der Offenstellung liegt das Betätigungselement am zweiten Piezo-Aktor an oder ist in einem Abstand zum zweiten Piezo-Aktor angeordnet, der kleiner ist als dessen maximale Längenausdehnung bei Beaufschlagung mit einer Spannung. Gleichzeitig ist das Betätigungselement in der Offenstellung in einem Abstand zum ersten Piezo-Aktor angeordnet, der größer ist als die maximale Längenausdehnung des zweiten Piezo-Aktors. Um das Dosierventil zu schließen, wird der zweite Piezo-Aktor mit Spannung beaufschlagt und dehnt sich aufgrund des Piezo-Effekts aus. Durch seine Längenänderung beaufschlagt er das Betätigungselement mit einem Impuls und "schießt" dieses in Richtung zum ersten Piezo-Aktor, wobei es den Schließkörper mitnimmt und in die Schließstellung bewegt.

Zweckmäßig weist das Dosierventil einen starren Rahmen mit zwei einander zugewandten Stützflächen auf, wobei der erste Piezo-Aktor an einer ersten der Stützflächen und der zweite Piezo-Aktor an der zweiten der Stützflächen abgestützt ist. Der Rahmen bringt die erforderliche Gegenkraft auf, wenn die Piezo-Aktoren das Betätigungselement zum Bewegen des Schließkörpers mit Kraft beaufschlagen. Dabei wird bevorzugt, dass der Abstand der Stützflächen zueinander variabel einstellbar ist, so dass der Hub des Schließkörpers variiert werden kann.

Da die Piezo-Aktoren nicht fest mit dem Betätigungselement verbunden sind, können sie den Schließkörper nicht in der Schließstellung oder in der Offenstellung halten. Zu diesem Zweck sind zweckmäßig erste Haltemittel zum Festhalten des Schließkörpers in der Schließstellung und/oder zweite Haltemittel zum Festhalten des Schließkörpers in der Offenstellung vorgesehen. Die ersten Haltemittel und/oder die zweiten Haltemittel weisen zweckmäßig mindestens einen Elektromagneten auf. Zudem wird bevorzugt, dass mit dem Schließkörper ein Haltelement aus ferromagnetischem Material fest verbunden ist, das vom mindestens einen Elektromagneten der ersten Haltemittel und/oder vom mindestens einen Elektromagneten der zweiten Haltemittel mit einer Kraft, vorzugsweise einer Anziehungskraft, beaufschlagbar ist. Das Halteelement ist dabei zweckmäßig zwischen den ersten Haltemitteln und den zweiten Haltemitteln hin und her beweglich angeordnet.

Das Dosierventil weist vorteilhaft eine Sicherheitseinrichtung auf, die eine den Schließkörper in Richtung zum Ventilsitz beaufschlagende Feder und einen Pneumatikzylinder mit einer Druckkammer aufweist. Der Kolben des Pneumatikzylinders beaufschlagt bei Einleitung von Druckluft in die Druckkammer den Schließkörper entgegen der Kraft der Feder mit Kraft. Zweckmäßig weist der Pneumatikzylinder ein elektrisch schaltbares Sicherheitsventil zum Verschließen der Druckkammer auf, das im stromlosen Zustand öffnet. Bei einem Stromausfall fällt die den Kolben beaufschlagende Kraft weg, so dass die Feder den Schließkörper auf den Ventilsitz drängt.

Es wird bevorzugt, dass zwischen dem ersten Piezo-Aktor und dem zweiten Piezo-Aktor eine an den Piezo-Aktoren abgestützte Druckfeder angeordnet ist. Durch diese Maßnahme sind die beiden Piezo-Aktoren gegeneinander abgestützt und ihre Ausdehnung erfolgt stets gegen eine Kraft, so dass insbesondere ein Delaminieren der Piezo-Aktoren verhindert wird.

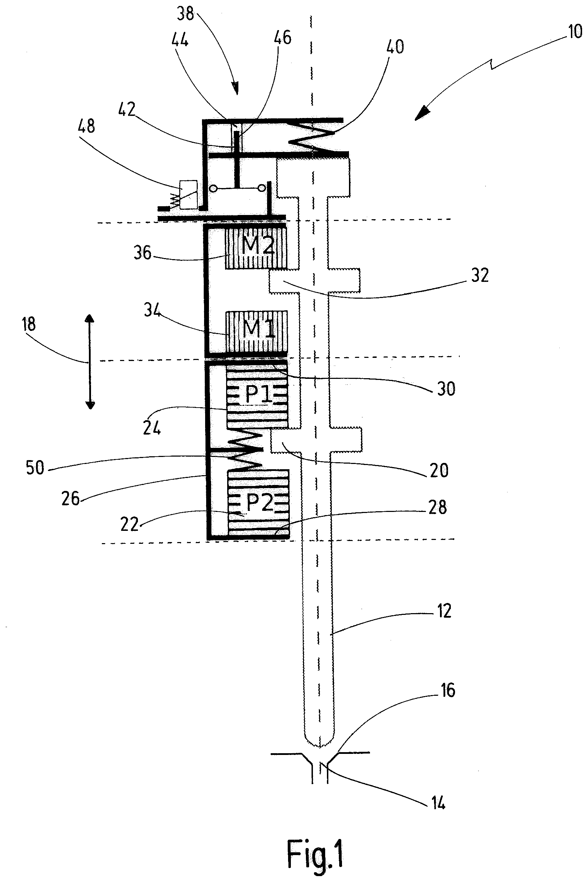

Im Folgenden wird die Erfindung anhand eines in der Zeichnung schematisch dargestellten Ausführungsbeispiels näher erläutert. Es zeigt
- Fig. 1: eine schematische Skizze zur Veranschaulichung der Funktionsweise eines Dosierventil.

In der Zeichnung ist ein als Nadelventil ausgebildetes Dosierventil 10 schematisch dargestellt, das als Schließkörper 12 eine Ventilnadel aufweist, die zum Verschließen eines Materialauslasses 14 auf einen Ventilsitz 16 aufgesetzt werden kann und zum Freigeben des Materialauslasses 14 vom Ventilsitz 16 abgehoben werden kann. Zum Verschließen und Freigeben des Materialauslasses 14 ist die Ventilnadel 12 linear in einer Längsrichtung 18 hin und her beweglich.

Mit der Ventilnadel 12 ist ein Betätigungselement 20 fest verbunden, das radial von der Ventilnadel 12 absteht. Das Betätigungselement 20 ist zwischen einem ersten Piezo-Aktor 22 und einem zweiten Piezo-Aktor 24 angeordnet, die jeweils an einem starren Rahmen 26 abgestützt sind. Der Rahmen 26 weist zwei einander zugewandte Stützflächen 28, 30 auf, wobei der erste Piezo-Aktor 22 an einer ersten Stützfläche 28 und der zweite Piezo-Aktor 24 an einer zweiten Stützfläche 30 abgestützt sind.

Befindet sich die Ventilnadel 12 in einer Schließstellung, in der sie auf dem Ventilsitz 16 aufsitzt, so liegt das Betätigungselement 20 am ersten Piezo-Aktor 22 an oder ist in geringem Abstand zu diesem angeordnet. Befindet sich die Ventilnadel 12 in einer Offenstellung, in der sie vom Ventilsitz 16 abgehoben ist, wie in Fig. 1 dargestellt, so liegt das Betätigungselement 20 am zweiten Piezo-Aktor 24 an oder befindet sich in geringem Abstand zu diesem. Zum Öffnen des Nadelventils 10 wird der erste Piezo-Aktor 22 mit einer elektrischen Spannung beaufschlagt und dehnt sich aufgrund des Piezo-Effekts aus. Seine Längenänderung in der Längsrichtung 18 führt dazu, dass das Betätigungselement 20 mit einem Impuls beaufschlagt und in Richtung zum zweiten Piezo-Aktor 24 bewegt wird, so dass es die Ventilnadel 12 mitnehmen und vom Ventilsitz 16 abheben kann. Zu diesem Zweck darf das Betätigungselement 20 dann, wenn sich die Ventilnadel 12 in der Schließstellung befindet, nur in einem Abstand zum ersten Piezo-Aktor 22 angeordnet sein, der kleiner ist als dessen maximale Längenausdehnung in der Längsrichtung 18. Gleichzeitig muss das Betätigungselement 20 in einem Abstand zum zweiten Piezo-Aktor 24 angeordnet sein, der größer ist als die maximale Längenänderung des ersten Piezo-Aktors 22 in der Längsrichtung 18. Der zweite Piezo-Aktor 24 begrenzt den Hub der Ventilnadel 12, indem das Betätigungselement 20 nicht weiter vom ersten Piezo-Aktor 22 weg bewegt werden kann, als bis es am zweiten Piezo-Aktor 24 zur Anlage kommt.

Zum Schließen des Nadelventils 10 wird der zweite Piezo-Aktor 24 mit einer elektrischen Spannung beaufschlagt und dehnt sich aus. Aufgrund seiner Längenänderung in der Längsrichtung 18 beaufschlagt er das Betätigungselement 20 mit einem Impuls, so dass dieses von ihm weg und auf den ersten Piezo-Aktor 22 zu bewegt wird. Es nimmt dabei die Ventilnadel 12 mit, so dass diese wieder auf dem Ventilsitz 16 aufsitzen kann und dadurch in die Schließstellung gelangt, in der sie den Materialauslass 14 verschließt. In der Offenstellung muss daher entweder das Betätigungselement 20 am zweiten Piezo-Aktor 24 lose anliegen oder in einem Abstand zu diesem angeordnet sein, der kleiner ist als die maximale Längenänderung des zweiten Piezo-Aktors 24 in der Längsrichtung 18. Zudem muss das Betätigungselement 20 in einem Abstand zum ersten Piezo-Aktor 22 angeordnet sein, der größer ist als die maximale Längenänderung des zweiten Piezo-Aktors 24 in der Längsrichtung 18, wenn sich die Ventilnadel 12 in der Offenstellung befindet.

Um die Ventilnadel 12 in der Schließstellung und in der Offenstellung festhalten zu können, ist die Ventilnadel 12 fest mit einem radial abstehenden Halteelement 32 aus einem ferromagnetischen Material verbunden. Das Halteelement 32 ist zwischen einem ersten Haltemittel 34 in Form eines ersten Elektromagnets und einem zweiten Haltemittel 36 in Form eines zweiten Elektromagnets angeordnet. Die Elektromagnete 34, 36 werden so geschaltet, dass das Halteelement 32 in der Schließstellung der Ventilnadel 12 am ersten Elektromagnet 34 anliegt und von diesem angezogen wird, während es in der Offenstellung der Ventiladel 12 am zweiten Elektromagnet 36 anliegt und von diesem angezogen wird.

Das Nadelventil 10 weist zudem eine Sicherheitseinrichtung 38 auf, die eine Fail-Safe-Funktion hat und dafür sorgt, dass bei einem Stromausfall der Materialauslass 14 verschlossen wird. Die Sicherheitseinrichtung 38 weist ein Rückstellelement in Form einer Feder 40 auf, die die Ventilnadel 12 in der Längsrichtung 18 auf den Ventilsitz 16 zu mit Kraft beaufschlagt. Gegen die Federkraft arbeitet ein Pneumatikzylinder 42, der eine Druckkammer 44 und einen in der Druckkammer 44 angeordneten Kolben 46 aufweist. Durch Einleiten von Druckluft in die Drucckammer 44 wird eine Kraft auf die Ventilnadel 12 ausgeübt, die gegen die Kraft der Feder 40 gerichtet ist. Ein Sicherheitsventil 48 verbindet die Druckkammer 44 mit der Umgebung und öffnet im stromlosen Zustand, so dass die Druckluft aus der Druckkammer 44 entweicht und die gegen die Federkraft gerichtete Kraft wegfällt, so dass die Feder 40 die Ventilnadel 12 auf den Ventilsitz 16 drücken kann.

Zwischen dem ersten Piezo-Aktor 22 und dem zweiten Piezo-Aktor 24 ist eine Druckfeder 50 an diesen anliegend angeordnet, die gespannt wird, wenn sich der Abstand zwischen den Piezo-Aktoren 22, 24 verringert, so dass sie einer Ausdehnung der Piezo-Aktoren 22, 24 eine Kraft entgegensetzt.

Zusammenfassend ist folgendes festzuhalten. Die Erfindung betrifft ein Dosierventil 10 mit einem Schließkörper 12 und einem Ventilsitz 16, wobei der Schließkörper 12 zwischen einer Schließstellung, in der er auf dem Ventilsitz 16 aufsitzt und einen Materialauslass 14 verschließt, und einer Offenstellung, in der er vom Ventilsitz 16 abgehoben ist und den Materialauslass 14 freigibt, in einer Längsrichtung 18 hin und her beweglich ist, mit einem mit dem Schließkörper 12 fest verbundenen Betätigungselement 20 und mit zwei Piezo-Aktoren 22, 24, zwischen denen das Betätigungselement 20 angeordnet ist, wobei das Betätigungselement 20 in der Schließstellung in einem Abstand zu einem ersten der Piezo-Aktoren 22 angeordnet ist, der kleiner ist als die maximale Längenänderung des ersten Piezo-Aktors 22 in der Längsrichtung 18, oder lose am ersten Piezo-Aktor 22 anliegt und in einem Abstand zum zweiten der Piezo-Aktoren 24 angeordnet ist, der größer ist als die maximale Längenänderung des ersten Piezo-Aktors 22 in der Längsrichtung 18, und wobei das Betätigungselement 20 in der Offenstellung in einem Abstand zum zweiten Piezo-Aktor 24 angeordnet ist, der kleiner ist als die maximale Längenänderung des zweiten Piezo-Aktors 24 in der Längsrichtung 18, oder lose am zweiten Piezo-Aktor 24 anliegt und in einem Abstand zum ersten Piezo-Aktor 22 angeordnet ist, der größer ist als die maximale Längenänderung des zweiten Piezo-Aktors 24 in der Längsrichtung 18.

## Patentansprüche

1. Dosierventil mit einem Schließkörper (12) und einem Ventilsitz (16), wobei der Schließkörper (12) zwischen einer Schließstellung, in der er auf dem Ventilsitz (16) aufsitzt und einen Materialauslass (14) verschließt, und einer Offenstellung, in der er vom Ventilsitz (16) abgehoben ist und den Materialauslass (14) freigibt, hin und her beweglich ist, mit einem mit dem Schließkörper (12) fest verbundenen Betätigungselement (20) und mit zwei Piezo-Aktoren (22, 24), zwischen denen das Betätigungselement (20) angeordnet ist, **dadurch gekennzeichnet, dass** das Betätigungselement (20) in der Schließstellung in einem Abstand zu einem ersten der Piezo-Aktoren (22) angeordnet ist, der kleiner ist als die maximale Längenänderung des ersten Piezo-Aktors (22), oder lose am ersten Piezo-Aktor (22) anliegt und in einem Abstand zum zweiten der Piezo-Aktoren (24) angeordnet ist, der größer ist als die maximale Längenänderung des ersten Piezo-Aktors (22), und dass das Betätigungselement (20) in der Offenstellung in einem Abstand zum zweiten Piezo-Aktor (24) angeordnet ist, der kleiner ist als die maximale Längenänderung des zweiten Piezo-Aktors (24), oder lose am zweiten Piezo-Aktor (24) anliegt und in einem Abstand zum ersten Piezo-Aktor (22) angeordnet ist, der größer ist als die maximale Längenänderung des zweiten Piezo-Aktors (24).

2. Dosierventil nach Anspruch 1, **gekennzeichnet durch** einen starren Rahmen (26) mit zwei einander zugewandten Stützflächen (28, 30), wobei der erste Piezo-Aktor (22) an einer ersten der Stützflächen (28) und der zweite Piezo-Aktor (24) an der zweiten der Stützflächen (30) abgestützt ist.

3. Dosierventil nach Anspruch 2, **dadurch gekennzeichnet, dass** der Abstand der Stützflächen (28, 30) zueinander variabel einstellbar ist.

4. Dosierventil nach einem der vorangehenden Ansprüche, **gekennzeichnet durch** erste Haltemittel (34) zum Festhalten des Schließkörpers (12) in der Schließstellung.

5. Dosierventil nach einem der vorangehenden Ansprüche, **gekennzeichnet durch** zweite Haltemittel (36) zum Festhalten des Schließkörpers (12) in der Offenstellung.

6. Dosierventil nach Anspruch 4 oder 5, **dadurch gekennzeichnet, dass** die ersten Haltemittel (34) und/oder die zweiten Haltemittel (36) mindestens einen Elektromagneten aufweisen.

7. Dosierventil nach Anspruch 6, **gekennzeichnet durch** ein fest mit dem Schließkörper (12) verbundenes Halteelement (32) aus ferromagnetischem Material, das vom mindestens einen Elektromagneten der ersten Haltemittel (34) und/oder vom mindestens einen Elektromagneten der zweiten Haltemittel (36) mit Kraft beaufschlagbar ist.

8. Dosierventil nach Anspruch 7, **dadurch gekennzeichnet, dass** das Haltelement (32) zwischen den ersten Haltemitteln (34) und den zweiten Haltemitteln (36) hin und her beweglich angeordnet ist.

9. Dosierventil nach einem der vorangehenden Ansprüche, **gekennzeichnet durch** eine Sicherheitseinrichtung (38), die ein den Schließkörper (12) in Richtung zum Ventilsitz (16) mit Kraft beaufschlagendes Rückstellelement (40) und einen Pneumatikzylinder (42) mit einer Druckkammer (44) aufweist, dessen Kolben (46) bei Einleitung von Druckluft in die Druckkammer (44) den Schließkörper (12) entgegen der Kraft des Rückstellelements (40) mit Kraft beaufschlagt.

10. Dosierventil nach Anspruch 9, **dadurch gekennzeichnet, dass** der Pneumatikzylinder (42) ein elektrisch schaltbares Sicherheitsventil (48) zum Verschließen der Druckkammer (44) aufweist, das im stromlosen Zustand öffnet.

11. Dosierventil nach einem der vorangehenden Ansprüche, **dadurch gekennzeichnet, dass** zwischen dem ersten Piezo-Aktor (22) und dem zweiten Piezo-Aktor (24) eine an den Piezo-Aktoren (22, 24) abgestützte Druckfeder (50) angeordnet ist.

12. Verfahren zum Dosieren von Flüssigkeit unter Verwendung eines Dosierventils (10) nach einem der vorangehenden Ansprüche, wobei zum Abheben des Schließkörpers (12) vom Ventilsitz (16) der erste Piezo-Aktor (22) ausgedehnt wird und einen Impuls an das Betätigungselement (20) überträgt, der das Betätigungselement (20) vom ersten Piezo-Aktor (22) weg bewegt, und dass zum Aufsetzen des Schließkörpers (12) auf den Ventilsitz (16) der zweite Piezo-Aktor (24) ausgedehnt wird und einen Impuls an das Betätigungselement (20) überträgt, der das Betätigungselement (20) vom zweiten Piezo-Aktor (24) weg bewegt.

## Claims

1. Metering valve having a closing body (12) and a valve seat (16), wherein the closing body (12) can be moved back and forth between a closed position, in which it sits on the valve seat (16) and closes off a material outlet (14), and an open position, in which it is lifted off from the valve seat (16) and releases the material outlet (14), having an activation element (20) firmly connected with the closing body (12) and having two piezo-actuators (22, 24), between which the activation element (20) is arranged,
**characterized in that** in the closed position, the activation element (20) is arranged at a distance from a first one of the piezo-actuators (22), which distance is less than the maximal change in length of the first piezo-actuator (22), or lies loosely against the first piezo-actuator (22) and is arranged at a distance from the second one of the piezo-actuators (24), which distance is greater than the maximal change in length of the first piezo-actuator (22), and **in that** in the open position, the activation element (20) is arranged at a distance from the second piezo-actuator (24) that is less than the maximal change in length of the second piezo-actuator (24), or lies loosely against the second piezo-actuator (24) and is arranged at a distance from the first piezo-actuator (22) that is greater than the maximal change in length of the second piezo-actuator (24).

2. Metering valve according to claim 1, **characterized by** a rigid frame (26) having two support surfaces (28, 30) that face one another, wherein the first piezo-actuator (22) is supported on a first one of the support surfaces (28) and the second piezo-actuator (24) is supported on the second one of the support surfaces (30).

3. Metering valve according to claim 2, **characterized in that** the distance between the support surfaces (28, 30) relative to one another can be variably adjusted.

4. Metering valve according to one of the preceding claims,
**characterized by** first holding means (34) for holding the closing body (12) in place in the closed position.

5. Metering valve according to one of the preceding claims,
**characterized by** second holding means (36) for holding the closing body (12) in place in the open position.

6. Metering valve according to claim 4 or 5, **characterized in that** the first holding means (34) and/or the second holding means (36) have at least one electromagnet.

7. Metering valve according to claim 6, **characterized by** a holding element (32) composed of ferromagnetic material that is firmly connected with the closing body (12), which element can have a force applied to it by the at least one electromagnet of the first holding means (34) and/or by the at least one electromagnet of the second holding means (36) .

8. Metering valve according to claim 7, **characterized in that** the holding element (32) is arranged so as to move back and forth between the first holding means (34) and the second holding means (36).

9. Metering valve according to one of the preceding claims,
**characterized by** a safety device (38) that comprises a reset element (40) that applies force to the closing body (12) in the direction toward the valve seat (16), and a pneumatic cylinder (42) having a pressure chamber (44), the piston (46) of which cylinder applies force to the closing body (12), counter to the force of the reset element (40), when compressed air is introduced into the pressure chamber (44) .

10. Metering valve according to claim 9, **characterized in that** the pneumatic cylinder (42) has an electrically switchable safety valve (48) for closing off the pressure chamber (44), which valve opens in the current-free state.

11. Metering valve according to one of the preceding claims,
**characterized in that** a pressure spring (50) that is supported on the piezo-actuators (22, 24) is arranged between the first piezo-actuator (22) and the second piezo-actuator (24).

12. Method for metering liquid, using a metering valve (10) according to one of the preceding claims, wherein in order to lift the closing body (12) off from the valve seat (16), the first piezo-actuator (22) is expanded and transfers a pulse to the activation element (20), which pulse moves the activation element (20) away from the first piezo-actuator (22), and that in order to set the closing body (12) onto the valve seat (16), the second piezo-actuator (24) is expanded and transfers a pulse to the activation element (20), which pulse moves the activation element (20) away from the second piezo-actuator (24).

## Revendications

1. Vanne de dosage comprenant un corps obturateur (12) et un siège d'obturation (16), ledit corps obturateur (12) pouvant être animé de mouvements alternatifs entre une position de fermeture, dans laquelle il repose sur le siège d'obturation (16) et obture une sortie de matière (14), et une position d'ouverture dans laquelle il est soulevé à l'écart dudit siège d'obturation (16) et libère ladite sortie de matière (14), comprenant un élément d'actionnement (20) relié rigidement audit corps obturateur (12), et deux actionneurs piézoélectriques (22, 24) entre lesquels ledit élément d'actionnement (20) est interposé, **caractérisée par le fait que**, dans la position de fermeture, l'élément d'actionnement (20) est espacé, par rapport à un premier actionneur (22) au sein des actionneurs piézoélectriques, d'une distance inférieure à la variation maximale de longueur dudit premier actionneur piézoélectrique (22), ou bien est en applique avec jeu sur ledit premier actionneur piézoélectrique (22) et est espacé, par rapport au second actionneur (24) au sein desdits actionneurs piézoélectriques, d'une distance supérieure à ladite variation maximale de longueur du premier actionneur piézoélectrique (22) ; et **par le fait que**, dans la position d'ouverture, ledit élément d'actionnement (20) est espacé, par rapport au second actionneur piézoélectrique (24), d'une distance inférieure à la variation maximale de longueur dudit second actionneur piézoélectrique (24), ou bien est en applique avec jeu sur ledit second actionneur piézoélectrique (24) et est espacé, par rapport au premier actionneur piézoélectrique (22), d'une distance supérieure à ladite variation maximale de longueur du second actionneur piézoélectrique (24).

2. Vanne de dosage selon la revendication 1, **caractérisée par** un cadre rigide (26) muni de deux surfaces d'appui (28, 30) situées en vis-à-vis l'une de l'autre, le premier actionneur piézoélectrique (22) et le second actionneur piézoélectrique (24) étant respectivement en appui contre une première surface (28), au sein des surfaces d'appui, et contre la seconde surface (30) au sein desdites surfaces d'appui.

3. Vanne de dosage selon la revendication 2, **caractérisée par le fait que** l'espacement mutuel des surfaces d'appui (28, 30) peut être réglé de manière variable.

4. Vanne de dosage selon l'une des revendications précédentes, **caractérisée par** des premiers moyens de maintien (34), conçus pour maintenir fermement le corps obturateur (12) dans la position de fermeture.

5. Vanne de dosage selon l'une des revendications précédentes, **caractérisée par** des seconds moyens de maintien (36), conçus pour maintenir fermement le corps obturateur (12) dans la position d'ouverture.

6. Vanne de dosage selon la revendication 4 ou 5, **caractérisée par le fait que** les premiers moyens de maintien (34) et/ou les seconds moyens de maintien (36) sont pourvus d'au moins un électro-aimant.

7. Vanne de dosage selon la revendication 6, **caractérisée par** un élément de retenue (32) en un matériau ferromagnétique, qui est relié rigidement au corps obturateur (12) et peut être soumis à l'action d'une force appliquée par l'électro-aimant, à présence minimale dans les premiers moyens de maintien (34), et/ou par l'électro-aimant à présence minimale dans les seconds moyens de maintien (36).

8. Vanne de dosage selon la revendication 7, **caractérisée par le fait que** l'élément de retenue (32) est interposé, avec faculté de mouvement alternatif, entre les premiers moyens de maintien (34) et les seconds moyens de maintien (36).

9. Vanne de dosage selon l'une des revendications précédentes, **caractérisée par** un dispositif de sécurité (38) comprenant un élément de rappel (40), appliquant une force au corps obturateur (12) en direction du siège d'obturation (16), et un vérin pneumatique (42) qui comporte une chambre de pression (44) et dont le piston (46) applique une force audit corps obturateur (12), en opposition à la force dudit élément de rappel (40), lorsque de l'air comprimé est introduit dans ladite chambre de pression (44).

10. Vanne de dosage selon la revendication 9, **caractérisée par le fait que** le vérin pneumatique (42) est doté d'une vanne de sécurité (48) commutable électriquement, qui est affectée à l'obturation de la chambre de pression (44) et s'ouvre à l'état privé de courant.

11. Vanne de dosage selon l'une des revendications précédentes, **caractérisée par le fait qu'**un ressort de compression (50), interposé entre le premier actionneur piézoélectrique (22) et le second actionneur piézoélectrique (24), est en appui contre lesdits actionneurs piézoélectriques (22, 24).

12. Procédé de dosage de liquide avec utilisation d'une vanne de dosage (10) conforme à l'une des revendications précédentes, sachant que, pour soulever le corps obturateur (12) à l'écart du siège d'obturation (16), le premier actionneur piézoélectrique (22) subit une dilatation et transmet, à l'élément d'actionnement (20), une impulsion qui imprime, audit élément d'actionnement (20), un mouvement l'éloignant dudit premier actionneur piézoélectrique (22) ; et sachant que, pour mettre ledit corps obturateur (12) en applique sur ledit siège d'obturation (16), le second actionneur piézoélectrique (24) subit une dilatation et transmet, audit élément d'actionnement (20), une impulsion qui imprime, audit élément d'actionnement (20), un mouvement l'éloignant dudit second actionneur piézoélectrique (24).
